# EUROPEAN PATENT APPLICATION

(11) **EP 2 635 038 A1**
(43) Date of publication of application: **04.09.2013**
(21) Application number: 12182986.5
(22) Date of filing: 04.09.2012
(51) Int. Cl.: H04N 21/422, H04N 21/858

(54) **Information processing device, broadcast wave receiver, and display control method**

(30) Priority: 22.12.2011 JP 2011281960
(71) Applicant: Kabushiki Kaisha Toshiba, Tokyo 105-8001 (JP)
(72) Inventor: Onodera, Mieko, Tokyo, 105-8001 (JP); Tsuchiuchi, Takayasu, Tokyo, 105-8001 (JP); Honsawa, Kunio, Tokyo, 105-8001 (JP)
(74) Representative: Henkel, Breuer & Partner

(57) **Abstract**

According to one embodiment, a display control method executed in an information processing device, the display control method includes: acquiring first data from outside of the information processing device (300); controlling a first display (306) to display first image based on the first data; acquiring, from a broadcast wave receiver (200) configured to display a video picture based on received broadcast data on a second display (216) different from the first display (306), second data to identify the first data corresponding to the broadcast data; and controlling, based on the first data acquired and the second data acquired, the first display (306) to display a second image to identify whether the first image displayed on the first display (306) corresponds to the video picture displayed on the second display (216).

## Description

### FIELD

An embodiment described herein relates generally to an information processing device, a broadcast wave receiver, and a display control method.

### BACKGROUND

There are conventionally known techniques of displaying an image corresponding to a video picture being displayed on a broadcast wave receiver such as a television receiver onto an information processing device such as a computer.

In such techniques, it is desired to be able to know more easily whether the image displayed on the information processing device corresponds to the video picture being displayed by the broadcast wave receiver.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary explanatory diagram illustrating a schematic configuration of an example of a system that comprises a broadcast wave receiver and an information processing device according to an embodiment;
FIG. 2 is an exemplary diagram illustrating an example of second data used in the system that comprises the broadcast wave receiver and the information processing device in the embodiment;
FIG. 3 is an exemplary block diagram illustrating an example of the broadcast wave receiver and the information processing device in the embodiment;
FIG. 4 is an exemplary flowchart illustrating an example of processing in the broadcast wave receiver when a video picture displayed on the broadcast wave receiver in the embodiment is changed;
FIG. 5 is an exemplary flowchart illustrating an example of processing in the information processing device when the video picture displayed on the broadcast wave receiver in the embodiment is changed;
FIG. 6 is an exemplary flowchart illustrating an example of processing in the information processing device when, for example, an image displayed on the information processing device in the embodiment is changed;
FIG. 7 is an exemplary flowchart illustrating another example, that is, an example other than that illustrated in FIG. 6, of processing in the information processing device when, for example, an image displayed on the information processing device in the embodiment is changed;
FIG. 8 is an exemplary diagram schematically illustrating an example of images displayed on the information processing device in the embodiment;
FIG. 9 is an exemplary diagram schematically illustrating an example of images displayed on the information processing device in the embodiment;
FIG. 10 is an exemplary diagram schematically illustrating an example of images displayed on the information processing device in the embodiment;
FIG. 11 is an exemplary diagram schematically illustrating an example of images displayed on the information processing device in the embodiment;
FIG. 12 is an exemplary diagram schematically illustrating an example of images displayed on the information processing device in the embodiment;
FIG. 13 is an exemplary diagram schematically illustrating an example of images displayed on the information processing device in the embodiment;
FIG. 14 is an exemplary diagram schematically illustrating an example of video pictures displayed on the broadcast wave receiver in the embodiment; and
FIG. 15 is an exemplary diagram schematically illustrating an example of images displayed, corresponding to the video pictures illustrated in FIG. 14, on the information processing device in the embodiment.

### SUMMARY

To overcome the problems and achieve the object mentioned above, according to an embodiment, an information processing device comprises: a first data acquisition module configured to acquire first data from outside of the information processing device; a first display configured to display a first image based on the first data; a second data acquisition module configured to acquire, from a broadcast wave receiver configured to display a video picture based on received broadcast data on a second display different from the first display, second data to identify the first data corresponding to the broadcast data; and a display controller configured to control the first display to display the first image based on the first data acquired by the first data acquisition module and to control, based on the first data acquired by the first data acquisition module and the second data acquired by the second data acquisition module, the first display to display a second image to identify whether the first image displayed on the first display corresponds to the video picture displayed on the second display.

According to another embodiment of the invention, a broadcast wave receiver comprises: a broadcast data receiver configured to receive broadcast data; a display controller configured to control a first display to display a video picture based on the broadcast data received by the broadcast data receiver; and a data transmitter configured to send, to an information processing device, second data to identify whether first data configured to serve as a source of an image displayed on a second display of the information processing device electrically connected to the broadcast wave receiver corresponds to the broadcast data configured to serve as a source of the video picture displayed on the first display.

According to still another embodiment of the invention, a display control method executed in an information processing device, the display control method comprising: acquiring first data from outside of the information processing device; controlling a first display to display first image based on the first data; acquiring, from a broadcast wave receiver configured to display a video picture based on received broadcast data on a second display different from the first display, second data to identify the first data corresponding to the broadcast data; and controlling, based on the first data acquired and the second data acquired, the first display to display a second image to identify whether the first image displayed on the first display corresponds to the video picture displayed on the second display.

### DETAILED DESCRIPTION

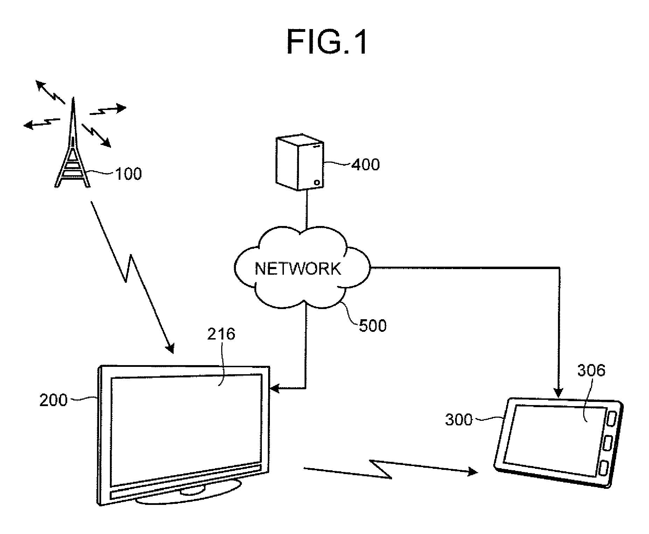

In a present embodiment, as an example, a system comprises a broadcast base station 100, a broadcast wave receiver 200, an information processing device 300, and a server 400, as illustrated in FIG. 1. The broadcast wave receiver 200, the information processing device 300 (own device), and the server 400 are electrically connected to each other via a wired or wireless network 500 (telecommunication line), and can send and receive data to and from each other. The broadcast wave receiver 200 is, as an example, a television receiver. Note that the broadcast wave receiver 200 may be configured, without having an output portion, so as to control an output of an output portion of a video display device (not illustrated) connected to the broadcast wave receiver 200. Note also that the information processing device 300 is, as an example, a computer of a desktop type, a notebook type, or a tablet type, a smartphone, a smartbook, a mobile phone, or a personal digital assistant (PDA).

The broadcast base station 100 sends broadcast data (broadcast waves or broadcast signals) such as a broadcast program. The broadcast data includes video data for each channel. The video data is, for example, a stream in a moving picture experts group 2 transport stream (MPEG-2 TS) format.

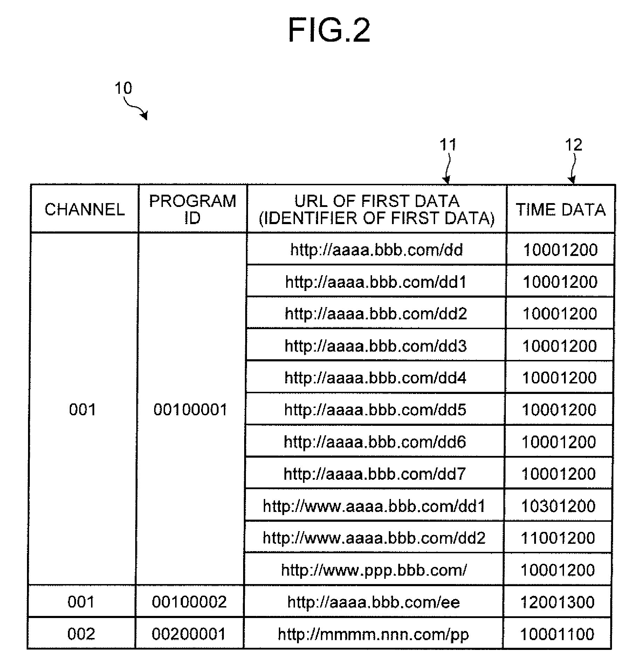

The broadcast data can also include first data (display data) corresponding to a channel, a broadcast program, a segment in a broadcast program, and so on. The first data is data serving as a source of an image (first image) output on an output portion 306 (display) of the information processing device 300 and on an output portion 216 (display) of the broadcast wave receiver 200. The first data is data in the form of, for example, hypertext markup language (HTML), cascading style sheets (CSS), or JavaScript (registered trademark). In some cases, the broadcast wave receiver 200 adds information to the first data included in the broadcast data, or the information processing device 300 modifies the first data included in the broadcast data. The first data can be sent and received among the broadcast wave receiver 200, the information processing device 300, and the server 400 via the network 500. In some cases, the broadcast data includes, instead of the first data, third data for acquiring the first data. The third data can be, for example, a uniform resource locator (URL) of the first data (identifier of the first data), and in that case, can be used also as a part of second data 10 (refer to FIG. 2) to be described later.

The broadcast data can also include the second data (identification data) that allows identifying the first data corresponding to the broadcast data. For example, as illustrated in FIG. 2, the second data 10 can include a channel (channel number, channel identification (ID)), a program ID, a URL 11 of the first data (identifier of the first data), and time data 12 with correspondence to each other. The format of the data, and content and type of included data are not limited to the example in FIG. 2. In the example of FIG. 2, the second data 10 is a list of a plurality of URLs of the first data. Note that, in the second data 10, domain names can be used instead of the URLs. The URLs may also be information for identifying data included in the broadcast data. The time data 12 is data that indicates a valid period of the first data. Specifically, as an example, four left digits of the eight-digit time data 12 illustrated in FIG. 2 indicate a start time while four right digits indicate an end time, and in each of the start and the end times, two left digits indicate "hour" while two right digits indicate "minute". More specifically, the time data 12 expressed as "10001200" indicates that the valid period of the first data whose URL is "http://aaaa.bbb.com/dd" starts at 10:00 and ends at 12: 00. The second data need not include the time data 12, but may be updated each time the valid period is changed. The second data 10 can also be sent and received among the broadcast wave receiver 200, the information processing device 300, and the server 400 via the network 500. The URLs illustrated in FIG. 2 define a range of a corresponding state (linked state) . The range of a corresponding state (linked state) is normally created and provided by a producer of a program or a provider of broadcast data.

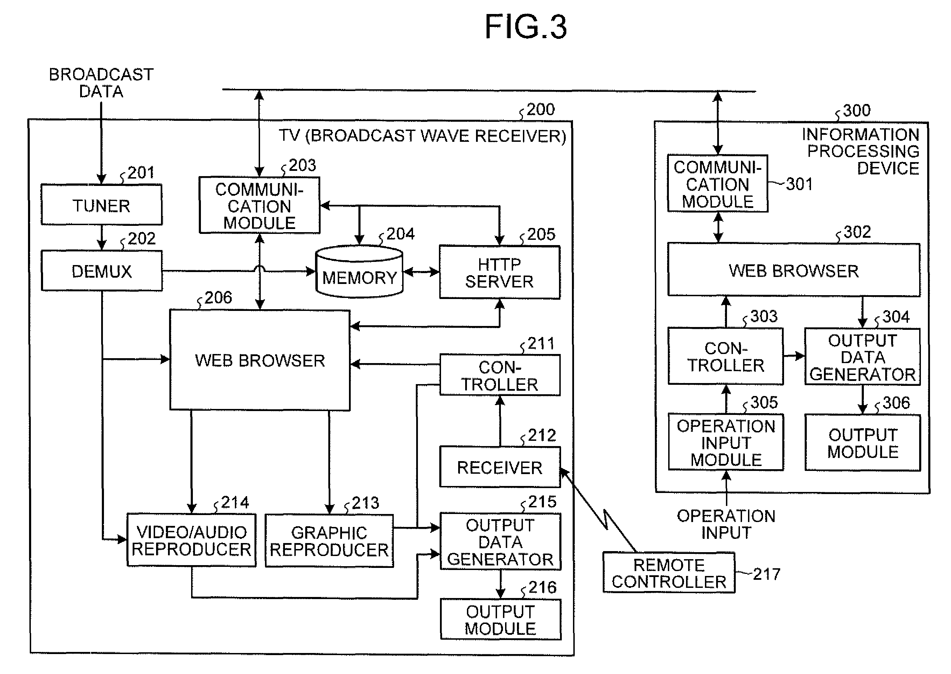

In the present embodiment, as an example, the broadcast wave receiver 200 comprises a tuner 201, a demultiplexer 202 (demux), a communication module 203, a memory 204, an HTTP server 205, a web browser 206, a controller 211, a receiver 212, a graphic reproducer 213, a video/audio reproducer 214, an output data generator 215, and the output portion 216, as illustrated in FIG. 3.

The tuner 201 is a receiver of the broadcast data (broadcast signals or broadcast waves). The demultiplexer 202 is a separator that separates various types of data from the received broadcast data. Video and audio data separated from the broadcast data is sent to the video/audio reproducer 214. The first data (display data) and the second data (identification data) separated from the broadcast data are sent to the memory 204. The first data and the second data sent to the memory 204 are data to be sent by the HTTP server 205 to other devices (such as the information processing device 300). The third data (data for acquiring the first data) separated from the broadcast data is sent to the web browser 206. The web browser 206 can acquire the first data corresponding to the third data from the server 400 via the communication module 203. In the present embodiment, as an example, the communication module 203, the video/audio reproducer 214, and the output data generator 215 are examples of a display controller that controls the output portion 216 (display) so as to display a video picture based on the broadcast data received in the broadcast wave receiver 200. Note that the output portion 216 can comprise, for example, speakers, in addition to the display (such as a liquid crystal display (LCD)).

The web browser 206 comprises a JavaScript (registered trademark) processor, an HTML processor, a video/audio element processor, an application program interface (API) processor, and a CSS processor (all not illustrated), and sends data obtained by analyzing and processing the acquired first data to the graphic reproducer 213 and the HTTP server 205. The data sent from the web browser 206 to the graphic reproducer 213 is output (displayed) from the output portion 216 via the output data generator 215. On the other hand, the data sent from the web browser 206 to the HTTP server 205 is the data to be sent by the HTTP server 205 to other devices (such as the information processing device 300), and stored in the memory 204. The receiver 212 receives a wireless signal (such as an infrared signal) from a remote controller 217 (external operation device), and the controller 211 sends data corresponding to an instruction by the wireless signal to the web browser 206 and the output data generator 215. The web browser 206 is realized, as an example, by an operation of a program (such as an application) that is stored in a memory (such as a hard disk drive (HDD)) of a computer, read out to an arithmetic processor (such as a central processing unit (CPU)) of the computer, and then executed.

The communication module 203 sends and receives data to and from other devices (such as the information processing device 300 and the server 400). Hence, in the present embodiment, the communication module 203 is an example of a data transmitter. In the present embodiment, as an example, the communication module 203 can also monitor a change in channel, program, and segment of the program of a video picture being output on the output portion 216, and when the change occurs, can notify the occurrence of the change (send data indicating the occurrence of the change) to other devices. In addition, if the broadcast data includes source data of the second data 10 instead of the second data 10 such as illustrated in FIG. 2, the communication module 203 can generate the second data used for monitoring, by gaining access to the server 400 based on the source data, or by analyzing the source data. That is, in the present embodiment, the communication module 203 is an example of a monitoring module (controlling module, controller, or display controller) that monitors the corresponding state (linked state) between the video picture being output on the output portion 216 of the broadcast wave receiver 200 and the video picture being output on the output portion 306 of the information processing device 300. A part of functions of the communication module 203 can also be realized by an operation of a program (such as an application) that is stored in a memory (such as an HDD) of a computer, read out to an arithmetic processor (such as a CPU) of the computer, and then executed.

Note that the "corresponding state" (linked state) in the present embodiment does not include a case in which the output portion 306 of the information processing device 300 outputs (displays) by coincidence an image corresponding to the video picture being output on the output portion 216 of the broadcast wave receiver 200. The "corresponding state" (linked state) represents a state in which, based on the data (such as the second data) acquired from the broadcast wave receiver 200, the output portion 306 of the information processing device 300 outputs an image (second image) that is understood to correspond to the video picture being output on the output portion 216 of the broadcast wave receiver 200. The output portion 306 of the information processing device 300 or the output portion 216 of the broadcast wave receiver 200 outputs (displays) information as to whether the video picture on the output portion 216 of the broadcast wave receiver 200 and the image on the output portion 306 of the information processing device 300 are in the "corresponding state" or not in the "corresponding state". Therefore, in the present embodiment, as an example, each of predetermined memories (not illustrated) in both of the broadcast wave receiver 200 and the information processing device 300 holds information (such as an internet protocol (IP) address or a media access control (MAC) address) indicating a target of communication by, for example, conducting (establishing) predetermined communication in advance between the broadcast wave receiver 200 and the information processing device 300 via, for example, the network 500, a wireless local area network (LAN), or a near field communication.

In the present embodiment, as an example, the information processing device 300 comprises a communication module 301, a web browser 302, a controller 303, an output data generator 304, an operation input portion 305, and the output portion 306, as illustrated in FIG. 3.

The communication module 301 sends and receives data to and from other devices (such as the broadcast wave receiver 200 and the server 400). Hence, in the present embodiment, as an example, the communication module 301 is an example of a first data acquisition module and a second data acquisition module. In the present embodiment, as an example, the communication module 301 can also monitor a change in the first data serving as a source of the image being output on the output portion 306, and when the change occurs, can notify the occurrence of the change (send data indicating the occurrence of the change) to the web browser 302. In that case, the web browser 302 changes the output (display) on the output portion 306 corresponding to the change in the first data. Alternatively, the communication module 301 can notify the occurrence of the change (send data indicating the occurrence of the change) to other devices. In the present embodiment, the communication module 301 is an example of a monitoring module (controlling module, controller, or display controller) that monitors the corresponding state (linked state) between the video picture being output on the output portion 216 of the broadcast wave receiver 200 and the video picture being output on the output portion 306 of the information processing device 300. A part of functions of the communication module 301 can also be realized by an operation of a program (such as an application) that is stored in a memory (such as an HDD) of a computer, read out to an arithmetic processor (such as a CPU) of the computer, and then executed.

The web browser 302 comprises a JavaScript (registered trademark) processor, an HTML processor, a video/audio element processor, an API processor, and a CSS processor (all not illustrated), and sends data obtained by analyzing and processing the acquired first data to the output data generator 304. The data sent to the output data generator 304 is output from (displayed on) the output portion 306. The operation input portion 305 (such as a touchscreen (touch sensor) , a keyboard, buttons, a mouse, or switches, as an example) generates data corresponding to an instruction based on an operation input by an operator (such as a user), and the controller 303 sends the data to the web browser 302 and the output data generator 304. The web browser 302 is realized, as an example, by an operation of a program (such as an application) that is stored in a memory (such as an HDD) of a computer, read out to an arithmetic processor (such as a CPU) of the computer, and then executed. In the present embodiment, as an example, the communication module 301, the web browser 302, and the output data generator 304 are examples of a display controller that controls the output portion 306 (display) so as to display the first image based on the first data and the second image based on the second data, where both of the data are acquired in the information processing device 300. Note that the output portion 306 can comprise, for example, speakers, in addition to the display (such as an LCD).

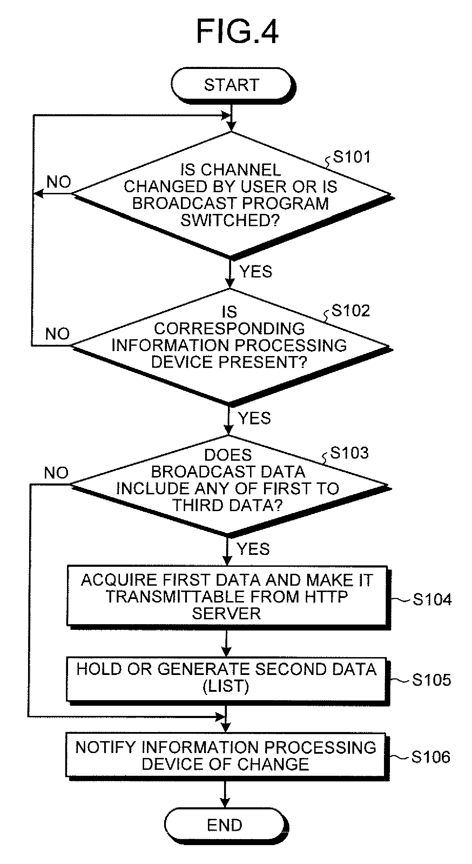

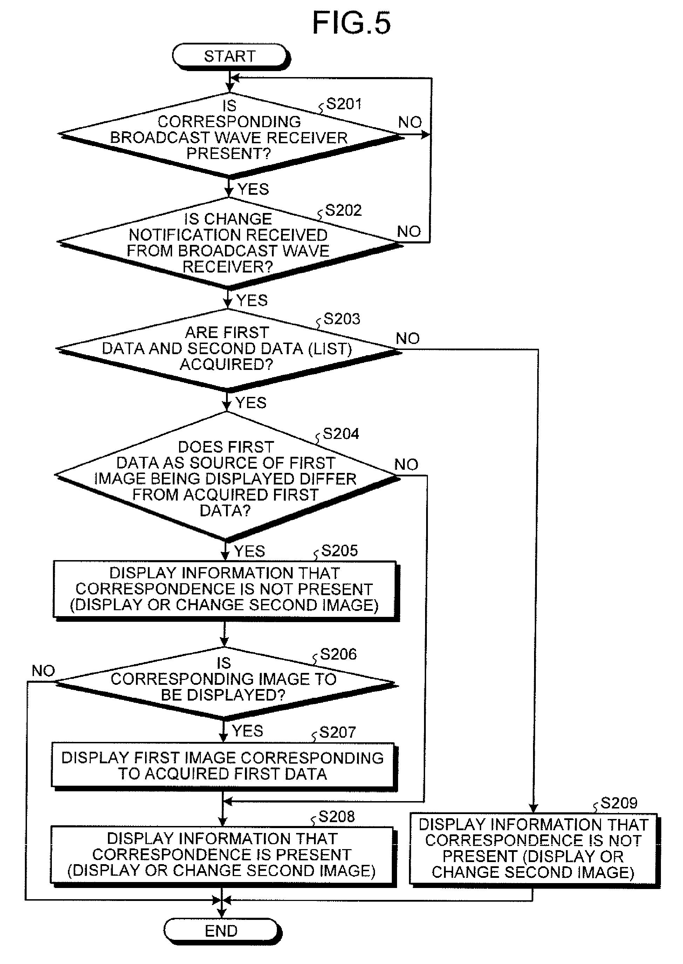

FIGS. 4 and 5 illustrate examples of processing flows in the broadcast wave receiver 200 and the information processing device 300 when the display on the output portion 306 of the information processing device 300 is changed due to a cause that has occurred on the side of the broadcast wave receiver 200. FIG. 4 illustrates an example of processing in the broadcast wave receiver 200, and FIG. 5 illustrates an example of processing in the information processing device 300.

As illustrated in FIG. 4, in the broadcast wave receiver 200, the communication module 203 monitors preset (prespecified) changes such as a channel change by a user, switching between broadcast programs and between segments in the broadcast program, and a power-on operation of the broadcast wave receiver 200. If any one of those changes occurs (Yes at S101), the communication module 203 checks whether the corresponding information processing device 300 is present (S102). If, at S101, none of the preset changes occurs (No at S101), or if, at S102, the corresponding information processing device 300 is not present (No at S102), the process returns to S101.

If the information processing device 300 corresponding to the broadcast wave receiver 200 is present (Yes at S102), the communication module 203 checks whether the broadcast data includes any of the first data to the third data (S103). If the broadcast data includes the first data (Yes at S103), the communication module 203 stores the first data acquired from the broadcast data in the memory 204, and places the first data in a state transmittable from the HTTP server 205 to the information processing device 300 serving as another device. If otherwise the broadcast data includes, instead of the first data, the third data for acquiring the first data, the communication module 203 can acquire the first data corresponding to the third data from, for example, the server 400, then store the first data in the memory 204, and then, place the first data in the state transmittable from the HTTP server 205 to the information processing device 300 serving as another device (S104).

The communication module 203 also holds (stores) the second data included in the broadcast data in the memory 204, and places the second data in a state transmittable to the information processing device 300. If otherwise the broadcast data includes, instead of the second data, the source data of the second data, the communication module 203 generates the second data used for monitoring by gaining access to the server 400 based on the source data, or by analyzing the source data (S105). At the time when the first data and the second data are ready for transmission to the information processing device 300 (after S104 and S105), or if, at S103, the broadcast data includes none of the first data to the third data (No at S103), the communication module 203 notifies to the information processing device 300 that an output state of the video picture on the output portion 216 has been changed (S106). Here, the state to be notified means a state in which the preset (prespecified) change mentioned at S101 described above has occurred.

FIG. 5 illustrates, corresponding to FIG. 4, an example of processing executed in the information processing device 300. Specifically, the communication module 301 of the information processing device 300 checks whether the corresponding broadcast wave receiver 200 is present (S201). If the corresponding broadcast wave receiver 200 is present (Yes at S201), the communication module 301 can receive from the broadcast wave receiver 200 the change notification issued at S106 in FIG. 4 (S202). If, at S201, the corresponding broadcast wave receiver 200 is not present, or if, at S202, the change notification cannot be received, the process returns to S201 (No at S201 or No at S202).

If, at S202, the change notification is received, the communication module 301 checks whether new (updated) first data and new (updated) second data are acquired as a result of access to the HTTP server 205 via the communication module 203 (S203). If, at S203, new (updated) first data and new (updated) second data cannot be found to be acquired (No at S203), the communication module 301 controls the web browser 302 so as to display, on the output portion 306, information that the correspondence is not present. More specifically, the output portion 306 displays (or changes) the second image that allows identifying whether the first image displayed on the output portion 306 corresponds to the video picture displayed on the output portion 216 (S209). Various examples of the second image will be described later.

On the other hand, if, at S203, the first data and the second data are found to be present (Yes at S203), the communication module 301 then compares the first data serving as a source of the first image being output (displayed) on the output portion 306 with the newly acquired first data (S204). If, at S204, the first data serving as a source of the first image being output (displayed) on the output portion 306 is the same as the newly acquired first data (No at S204), the communication module 301 controls the web browser 302 so as to display, on the output portion 306, information that the correspondence is present. That is, the second image is displayed on the output portion 306 (S208).

On the other hand, if, at S204, the first data serving as a source of the first image being output (displayed) on the output portion 306 differs from the newly acquired first data (Yes at S204), the communication module 301 controls the web browser 302 so as to display, on the output portion 306, the information that the correspondence is not present. That is, the second image is displayed on the output portion 306 (S205).

After S205, the communication module 301 controls the web browser 302 so as to display, on the output portion 306, an image used for selecting whether to display the corresponding image, thus prompting a user to enter a selection input (S206). If the user enters an input to select to display the corresponding image (Yes at S206), the communication module 301 controls the web browser 302 so as to display, on the output portion 306, the first image based on the corresponding first data (S207). The communication module 301 then controls the web browser 302 so as to display, on the output portion 306, the information that the correspondence is present. That is, the second image is displayed on the output portion 306 (S208). If the user enters an input to select not to display the corresponding image (No at S206), the process is terminated.

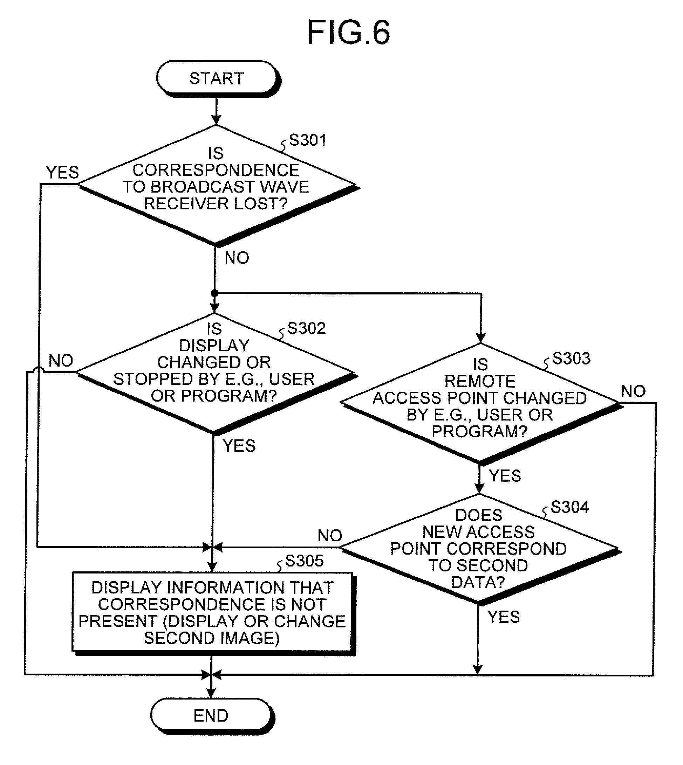

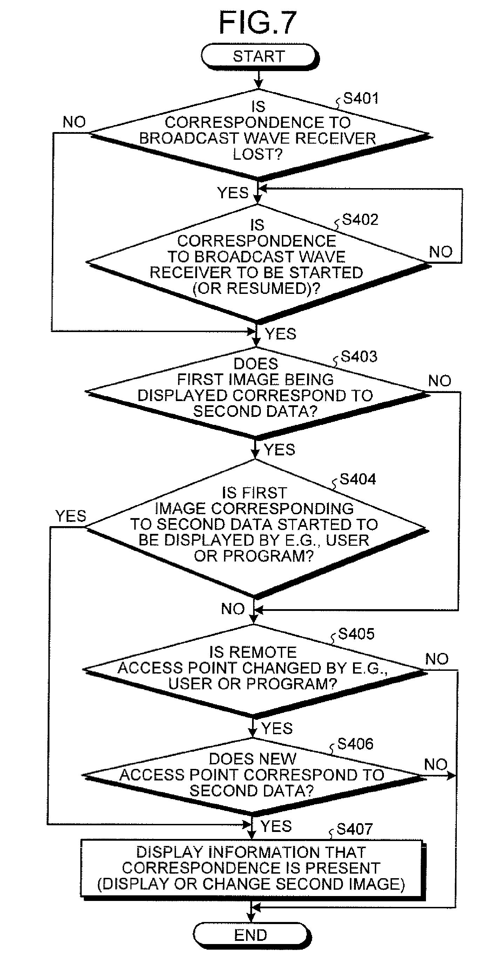

FIGS. 6 and 7 each illustrates an example of a processing flow in the information processing device 300 when the display on the output portion 306 of the information processing device 300 is changed due to a cause that has occurred on the side of the information processing device 300. FIG. 6 illustrates an example of processing in the information processing device 300 when the corresponding state (linked state) is eliminated, and FIG. 7 illustrates an example of processing in the information processing device 300 when the corresponding state (linked state) is started (resumed).

As illustrated in FIG. 6, the communication module 301 checks whether the correspondence to the broadcast wave receiver 200 is lost, that is, whether the broadcast wave receiver 200 is no longer the target of communication (S301). If, at S301, the correspondence to the broadcast wave receiver 200 is found to be lost (Yes at S301), the communication module 301 controls the web browser 302 so as to display, on the output portion 306, the information that the correspondence is not present (S305).

If, at S301, the correspondence to the broadcast wave receiver 200 is not lost (No at S301), the communication module 301 checks whether the display has been changed or stopped by, for example, a user or the program (S302). If, at S302, the display has not been changed or stopped by, for example, a user or the program (No at S302), the process is terminated. On the other hand, if, at S302, the display has been changed or stopped by, for example, a user or the program (Yes at S302), the communication module 301 controls the web browser 302 so as to display, on the output portion 306, the information that the correspondence is not present (S305).

If the correspondence to the broadcast wave receiver 200 is not lost at S301 (No at S301), the communication module 301 further checks whether the remote access point has been changed by, for example, a user or the program (S303). If, at S303, the remote access point has been changed (Yes at S303), the communication module 301 further checks whether the new access point (for example, the identifier of the first data of the new access point) corresponds to the second data (S304). If, at S304, the new access point (for example, the identifier of the first data of the new access point) does not correspond to the second data (No at S304), the communication module 301 controls the web browser 302 so as to display, on the output portion 306, the information that the correspondence is not present (S305). On the other hand, if, at S303, the remote access point has not been changed (No at S303), or if, at S304, the new access point corresponds to the second data (Yes at S304), the process is terminated.

On the other hand, as illustrated in FIG. 7, if the correspondence to the broadcast wave receiver 200 is lost (Yes at S401), and then, from that state, the correspondence to the broadcast wave receiver 200 is started (or resumed) (Yes at S402), or if, at S401, the correspondence to the broadcast wave receiver 200 is present (No at S401), the communication module 301 checks whether the first image being displayed on the output portion 306 corresponds to the second data (S403). If, at S402, the correspondence to the broadcast wave receiver 200 is not started (or resumed) (No at S402), S402 is repeated.

If, at S403, the first image being displayed on the output portion 306 corresponds to the second data (Yes at S403), the communication module 301 checks whether the first image corresponding to the second data is started to be displayed by, for example, a user or the program (S404). If, at S404, the first image corresponding to the second data is started to be displayed by, for example, a user or the program (Yes at S404), the communication module 301 controls the web browser 302 so as to display, on the output portion 306, the information that the correspondence is present (S407).

If, at S403, the first image being displayed on the output portion 306 does not correspond to the second data (No at S403), or if, at S404, the first image corresponding to the second data is not started to be displayed by, for example, a user or the program (No at S404), the communication module 301 checks whether the remote access point has been changed by, for example, a user or the program (S405). If, at S405, the remote access point has not been changed by, for example, a user or the program (No at S405), the process is terminated.

If, at S405, the remote access point has been changed by, for example, a user or the program (Yes at S405), the communication module 301 checks whether the new access point corresponds to the second data (S406). If, at S406, the new access point corresponds to the second data (Yes at S406), the communication module 301 controls the web browser 302 so as to display, on the output portion 306, the information that the correspondence is present (S407). On the other hand, if, at S406, the new access point does not correspond to the second data (No at S406), the process is terminated.

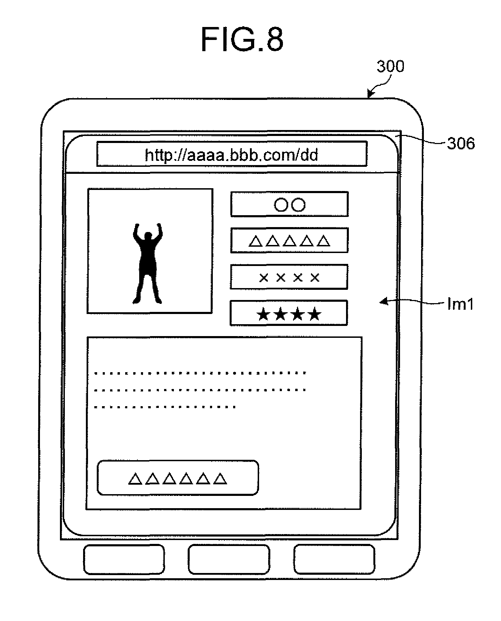

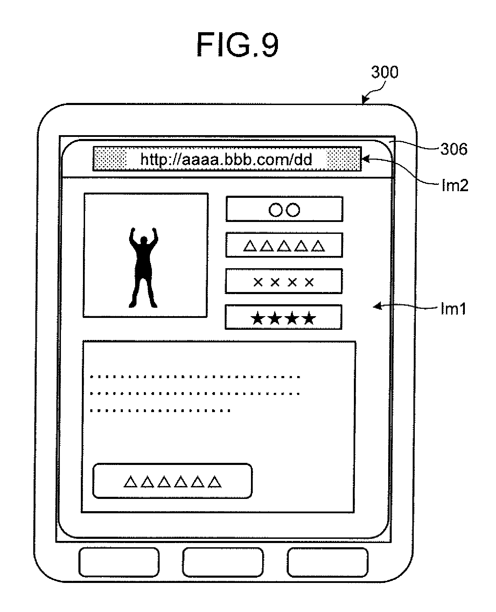

FIG. 8 is a schematic view of the information processing device 300 in the case in which the first image Im1 displayed on the output portion 306 of the information processing device 300 does not correspond to the video picture displayed on the output portion 216 of the broadcast wave receiver 200, whereas FIG. 9 is a schematic view of the information processing device 300 in the case in which the first image Im1 displayed on the output portion 306 of the information processing device 300 corresponds to the video picture displayed on the output portion 216 of the broadcast wave receiver 200. As illustrated in FIG. 9, in the state in which the correspondence is present, a part of the first image Im1 based on the first data is displayed in a state different from the other part (general part). In the example of FIG. 9, the background and the surrounding area of the text of a URL (an area indicated by a dot pattern in FIG. 9) are, for example, colored in a color more distinct than that of the background of the other part. That is, this colored area is an example of the second image Im2. Hence, according to the present embodiment, as an example, a user of the information processing device 300 can more easily recognize, based on the existence or nonexistence of the colored area, whether the first image Im1 on the output portion 306 of the information processing device 300 corresponds to the video picture on the output portion 216 of the broadcast wave receiver 200.

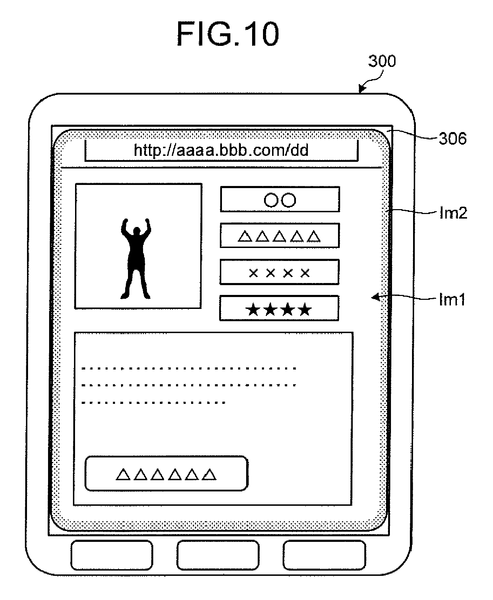

In an example of FIG. 10, as an example, the second image Im2 is displayed as an area (area indicated by a dot pattern in FIG. 10) colored in a frame-like shape around the first image Im1. That is, this colored area is an example of the second image Im2. Hence, according to the present embodiment, as an example, a user of the information processing device 300 can more easily recognize, based on the existence or nonexistence of the colored area, whether the first image Im1 on the output portion 306 of the information processing device 300 corresponds to the video picture on the output portion 216 of the broadcast wave receiver 200.

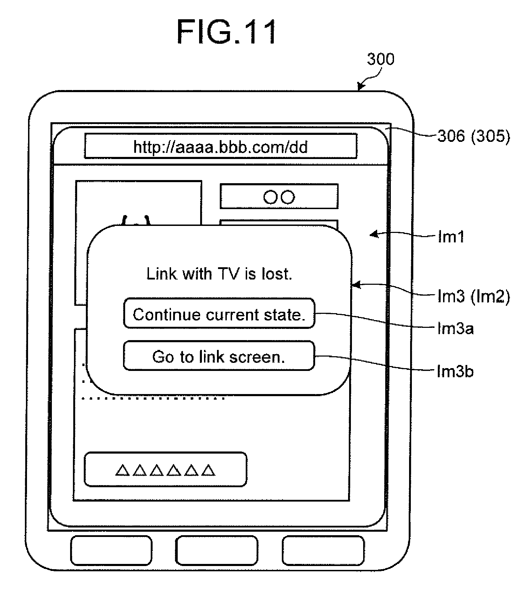

FIG. 11 illustrates an example of a pop-up image Im3 that is displayed on the output portion 306 when the correspondence (link) between the first image Im1 on the output portion 306 of the information processing device 300 and the video picture on the output portion 216 of the broadcast wave receiver 200 is lost. The pop-up image Im3 is also an example of the second image Im2. Operation input areas Im3a and Im3b are set in the pop-up image Im3. Accordingly, a user can select an operation by operating the operation input areas (buttons) Im3a and Im3b on the operation input portion 305 (touchscreen).

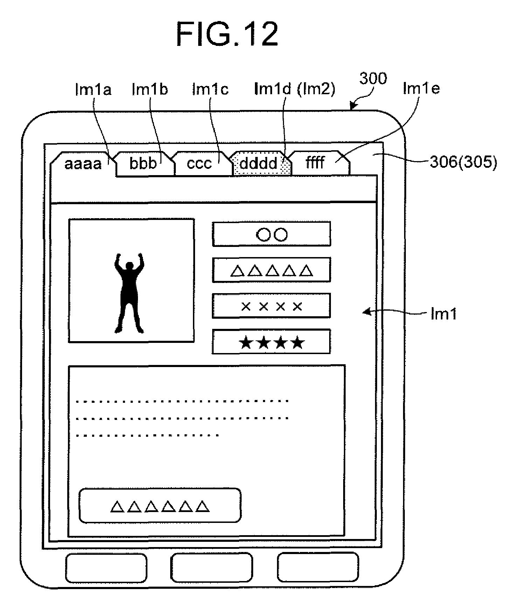

In an example of FIG. 12, as an example, the second image Im2 is displayed as a tab Im1d (an area indicated by a dot pattern in FIG. 12) that is selectively colored among a plurality of tabs Im1a to Im1e (display elements or shapes) in the first image Im1. That is, this colored tab Im1d (area) is an example of the second image Im2. Hence, according to the present embodiment, as an example, a user of the information processing device 300 can more easily recognize, based on the existence or nonexistence of the colored tab Im1d (area), whether the first image Im1 on the output portion 306 of the information processing device 300 corresponds to the video picture on the output portion 216 of the broadcast wave receiver 200. If there is no tab that can be the second image Im2, the second image Im2 may be displayed by creating a new tab. Moreover, in the present embodiment, as an example, the tabs Im1a to Im1e (areas) can be set as operation input areas of the operation input portion 305 (touchscreen). Specifically, as an example, it is configured that, when a user touches any one of the tabs Im1a to Im1e, the first image Im1 corresponding to the touched one of the tabs Im1a to Im1e is displayed. Hence, the user can switch the first image displayed on the output portion 306 relatively easily by operating the tabs Im1a to Im1e serving as the operation input areas of the operation input portion 305 (touchscreen).

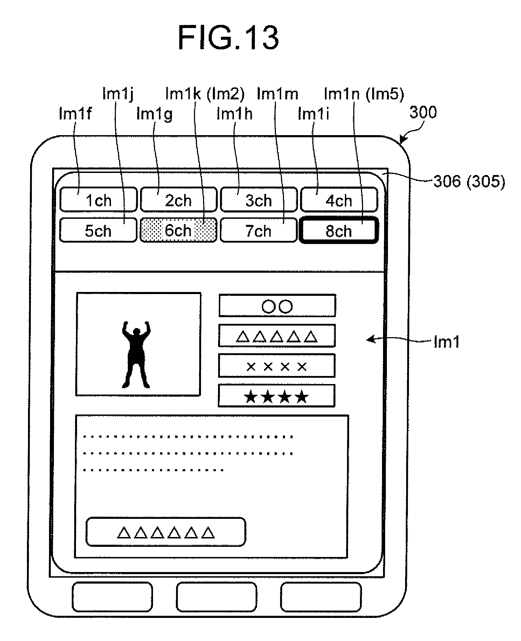

In an example of FIG. 13, the first image Im1 comprises, as an example, a plurality of buttons Im1f to Im1n (display elements or shapes) that represent channels. Specifically, the second image Im2 is displayed as a button Imlk (an area indicated by a dot pattern in FIG. 13) that is selectively colored among the buttons Im1f to Im1n in the first image Im1. That is, this colored button Im1k (area) is an example of the second image Im2. Hence, according to the present embodiment, as an example, a user of the information processing device 300 can more easily recognize, based on the existence or nonexistence of the colored button Imlk (area), whether the first image Im1 on the output portion 306 of the information processing device 300 corresponds to the video picture on the output portion 216 of the broadcast wave receiver 200. Moreover, in the present embodiment, as an example, the buttons Im1f to Im1n can be set as operation input areas. Specifically, as an example, it is configured that, when a user touches any one of the buttons Im1f to Im1n, the first image Im1 of a channel corresponding to the touched one of the buttons Im1f to Im1n is displayed. Hence, the user can switch the first image displayed on the output portion 306 relatively easily by operating the buttons Im1f to Im1n serving as the operation input areas of the operation input portion 305 (touchscreen). In the example of FIG. 13, the first image Im1 does not correspond to the video picture on the output portion 216 of the broadcast wave receiver 200. In such a case, a third image Im5 is displayed that allows identifying the channel of the broadcast data to which the first image Im1 corresponds. Specifically, the third image Im5 is displayed as, for example, a button Im1n arranged with an image of a thick frame among the buttons Im1f to Im1n in the first image Im1. Then, when the user touches the button Im1k in the example of FIG. 13, the first image Im1 of the channel corresponding to the button Im1k is displayed on the screen. In addition, the button Imlk is arranged with the image with the thick frame and colored in the first image Im1 in this case. Hence, according to the present embodiment, as an example, the user of the broadcast wave receiver 200 and the information processing device 300 can still more easily recognize, based on the colored area and the image with the thick frame, to which channel the first image Im1 on the output portion 306 of the information processing device 300 corresponds, and also whether the first image Im1 corresponds to the video picture on the output portion 216 of the broadcast wave receiver 200.

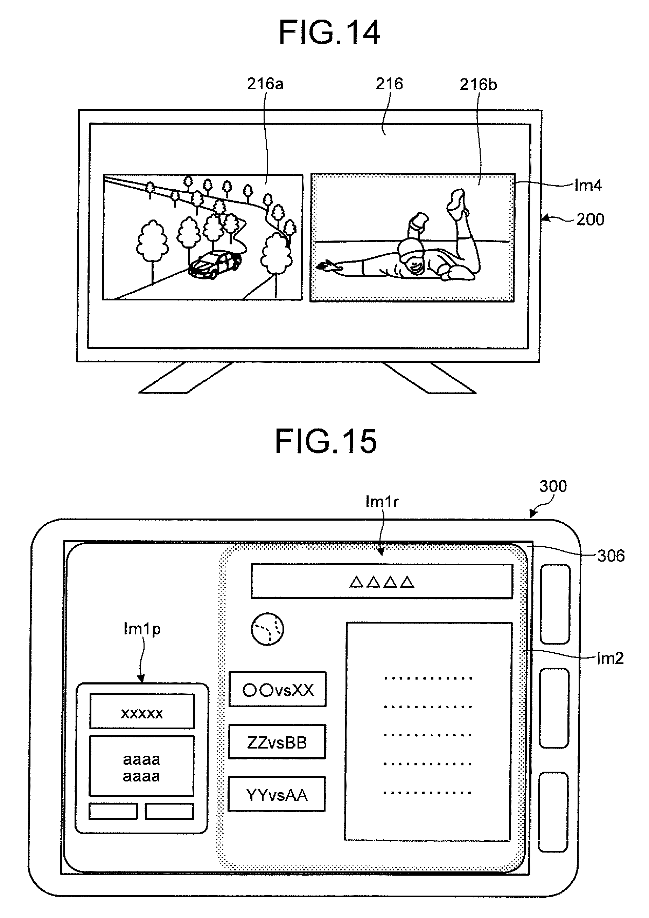

FIGS. 14 and 15 illustrate an example in which a plurality of different video pictures 216a and 216b and a plurality of different first images Im1p and Im1r are displayed on the output portion 216 of the broadcast wave receiver 200 and on the output portion 306 of the information processing device 300, respectively. In this example, the video picture 216b on the right side of the two video pictures 216a and 216b corresponds to the image Im1r on the right side of the first images Im1p and Im1r that are displayed on the output portion 306 of the information processing device 300. Second images Im2 and Im4 are displayed as areas (areas indicated by dot patterns in FIGS. 14 and 15) colored in frame-like shapes around the mutually corresponding video picture 216b and image Im1r, respectively. That is, these colored areas are examples of the second images Im2 and Im4. Hence, according to the present embodiment, as an example, the user of the broadcast wave receiver 200 and the information processing device 300 can more easily recognize, based on the existence or nonexistence of the colored areas, which of the first images Imlp and Im1r on the output portion 306 of the information processing device 300 does or does not correspond to which of the video pictures Imlp and Im1r on the output portion 216 of the broadcast wave receiver 200.

As described above, in the present embodiment, as an example, the display controller, such as the web browser 302, of the information processing device 300 controls, based on the first data and the second data, the output portion 306 so as to display the second image Im2 that allows identifying whether the first image Im1 displayed on the output portion 306 of the information processing device 300 corresponds to the video picture displayed on the output portion 216 of the broadcast wave receiver 200. Hence, according to the present embodiment, as an example, it is easier to know whether the image displayed on the information processing device 300 corresponds to the video picture being displayed by the broadcast wave receiver 200.

Moreover, in the present embodiment, as an example, the second data comprises the identifier of the first data corresponding to the broadcast data. Hence, according to the present embodiment, as an example, the information processing device 300 can identify more easily or more quickly whether the image corresponds to the video picture being displayed by the broadcast wave receiver 200.

Furthermore, in the present embodiment, as an example, the second data comprises the time data corresponding to the first data. Hence, according to the present embodiment, as an example, a range of the first data corresponding to the video picture can be set for each segment of time in a program.

While a certain embodiment has been exemplified above, the embodiment has been presented by way of example only, and is not intended to limit the scope of the inventions. The embodiment may be embodied in a variety of other forms, and various omissions, substitutions, combinations, and changes may be made without departing from the spirit of the inventions. The embodiment and modifications thereof are included in the scope and spirit of the inventions, and also included in the scope of the inventions as disclosed in the accompanying claims and their equivalents.

The invention may be modified in various ways. For example, the invention may be configured such that the display of the broadcast wave receiver or of the video display device electrically connected to the broadcast wave receiver comprises a screen that displays the video picture and a screen that displays the first image. Also in this case, the same effect is obtained by almost the same processing as that of the embodiment described above. The technical features of the above-described embodiment may be implemented by being combined or replaced as appropriate. The specifications (such as structure, type, direction, shape, size, length, width, thickness, height, number, arrangement, position, and material) of each of the components and the second image may be changed as appropriate and put into practice. For example, an IP address may be used instead of the URL as the identifier.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An information processing device (300) comprising:
a first data acquisition module (301) configured to acquire first data from outside of the information processing device (300);
a first display (306) configured to display a first image based on the first data;
a second data acquisition module (301) configured to acquire, from a broadcast wave receiver (200) configured to display a video picture based on received broadcast data on a second display (216) different from the first display (306), second data to identify the first data corresponding to the broadcast data; and
a display controller (301, 302, 304) configured to control the first display (306) to display the first image based on the first data acquired by the first data acquisition module (301) and to control, based on the first data acquired by the first data acquisition module (301) and the second data acquired by the second data acquisition module (301), the first display (306) to display a second image to identify whether the first image displayed on the first display (306) corresponds to the video picture displayed on the second display (216).

2. The information processing device (300) of Claim 1, wherein the second data comprises an identifier of the first data corresponding to the broadcast data.

3. The information processing device (300) of Claim 2, wherein the second data comprises a plurality of identifiers of the first data corresponding to the broadcast data.

4. The information processing device (300) of any one of Claims 1 to 3, wherein the second data comprises time data corresponding to the first data.

5. The information processing device (300) of any one of Claims 1 to 4, wherein the second data is comprised in the broadcast data.

6. The information processing device (300) of any one of Claims 1 to 5, wherein the first data is comprised in the broadcast data and the first data acquisition module (301) is configured to acquire the first data from the broadcast wave receiver (200).

7. The information processing device (300) of any one of Claims 1 to 6, wherein the display controller (301, 302, 304) is configured to control the first display (306), when the second data acquired by the second data acquisition module (301) is changed, to display the second image updated in response to the change of the second data.

8. The information processing device (300) of any one of Claims 1 to 7, wherein the display controller (301, 302, 304) is configured to control the first display (306), when the first data acquired by the first data acquisition module (301) is changed, to display the second image updated in response to the change of the first data.

9. A broadcast wave receiver (200) comprising:
a broadcast data receiver (201) configured to receive broadcast data;
a display controller (203, 214, 215) configured to control a first display (216) to display a video picture based on the broadcast data received by the broadcast data receiver (201); and
a data transmitter (203) configured to send, to an information processing device (300), second data to identify whether first data configured to serve as a source of an image displayed on a second display (306) of the information processing device (300) electrically connected to the broadcast wave receiver (200) corresponds to the broadcast data configured to serve as a source of the video picture displayed on the first display (216).

10. A display control method executed in an information processing device, the display control method comprising:
acquiring first data from outside of the information processing device (300);
controlling a first display (306) to display first image based on the first data;
acquiring, from a broadcast wave receiver (200) configured to display a video picture based on received broadcast data on a second display (216) different from the first display (306), second data to identify the first data corresponding to the broadcast data; and
controlling, based on the first data acquired and the second data acquired, the first display (306) to display a second image to identify whether the first image displayed on the first display (306) corresponds to the video picture displayed on the second display (216).
